# EUROPÄISCHE PATENTSCHRIFT

(11) **EP 1 115 906 B1**
(45) Veröffentlichungstag und Bekanntmachung des Hinweises auf die Patenterteilung: **05.02.2003**
(21) Anmeldenummer: 99955679.8
(22) Anmeldetag: 09.09.1999
(51) Int. Cl.: C23F 1/44, F01D 5/00

(54) **VERFAHREN ZUR INNENBEARBEITUNG EINES HOHLEN BAUTEILS**
METHOD FOR PROCESSING THE INTERIOR OF A HOLLOW PART
PROCEDE DE TRAITEMENT DE L'INTERIEUR D'UN ELEMENT CREUX

(30) Priorität: 21.09.1998 DE 19843169
(43) Veröffentlichungstag der Anmeldung: 18.07.2001
(73) Patentinhaber: SIEMENS AKTIENGESELLSCHAFT, 80333 München (DE)
(72) Erfinder: CZECH, Norbert, D-46286 Dorsten (DE)
(86) Internationale Anmeldenummer: DE9902856
(87) Internationale Veröffentlichungsnummer: WO00017417

(56) Entgegenhaltungen:
- EP-A- 0 525 545
- EP-A- 0 761 386
- US-A- 2 948 092
- US-A- 4 176 433
- US-A- 4 339 282
- US-A- 4 439 241

## Beschreibung

Die Erfindung betrifft ein Verfahren zur Innenbearbeitung eines hohlen Bauteils für eine Hochtemperaturanwendung mit einem Grundkörper aus einem Grundwerkstoff, welches Bauteil einen Hohlraum mit einer Innenbeschichtung aufweist.

In der WO 97/05299 A1 ist ein Erzeugnis, insbesondere eine Gasturbinenkomponente wie eine Turbinenschaufel, mit einem metallischen Grundkörper, in welchen Kühlkanäle eingebracht sind, beschrieben. Der metallische Grundkörper ist hierbei aus einem hoch-warmfesten Werkstoff hohl und dünnwandig gegossen. Hierdurch wird eine effiziente Kühlung mit einem Kühlmedium, insbesondere Kühlluft, von der Innenseite der Schaufel her ermöglicht. Der Grundkörper weist mindestens einen Kühl-Längskanal und eine Anzahl davon abzweigender Kühl-Querkanäle auf. Auf der Heißgasseite der Schaufel ist eine Beschichtung vorgesehen, die den metallischen Grundkörper gegen Oxidation und Hochtemperatur-Korrosion vor einem die Gasturbine durchströmenden Heißgas schützt. Auf dieser Korrosionsschutzschicht ist eine weitere heißgasseitige Beschichtung aus einem keramischen Werkstoff zur Verringerung des Wärmeflusses in die Schaufel hinein aufgebracht. Die Kühl-Querkanäle können als Perforationen im Schaufelblatt oder an einer Plattform ausgebildet sein. Mit dem Verfahren wird eine Beschichtung der Querkanäle erreicht, ohne daß ihr Querschnitt unkontrolliert verengt wird. Im Inneren ist die Schaufel mit einer Anreicherungsschicht, welche als Diffusionsschicht ausgebildet ist, versehen, d.h. durch Eindiffusion eines gesondert aufgebrachten Metalls in den Grundkörper gebildet. Als solches Metall wird Aluminium, Chrom, sowie Chrom-Aluminium-Legierungen bevorzugt verwendet.

In der EP 0 525 545 B1 ist ein Verfahren zur Instandsetzung eines Werkstücks aus einer korrodierten Superlegierung oder einem korrodierten hitzebeständigen Stahl beschrieben. Hierbei sind auf der Oberfläche des Werkstücks Korrosionsprodukte vorhanden, wobei die Oberfläche zur Entfernung eines wesentlichen Teils der korrodierten Oberfläche gereinigt wird. Anschließend wird auf die Oberfläche eine Aluminidschicht aufgebracht, welche so tief reicht, daß sie im wesentlichen alle nach dem Reinigen zurückgebliebenen Korrosionsprodukte einschließt. Die Aluminidschicht wird zusammen mit den Korrosionsprodukten wieder entfernt. Dieses Verfahren betrifft ausschließlich die Instandsetzung der Außenoberfläche eines Werkstücks, insbesondere einer Gasturbinenschaufel. Die Entfernung der Oberflächen-Korrosionsprodukte erfolgt hier auf chemischem und/oder mechanischem Wege. Eine mechanische Entfernung erfolgt bevorzugt durch Abrasivstrahlen und eine chemische Entfernung durch die Verwendung von Säuregemischen, wobei auch Flußsäure (wäßrige Lösung von Fluorwasserstoff) Verwendung findet.

In der US-PS 4,339,282 ist eine Methode zur Entfernung von Aluminidbeschichtungen von einer Nickel-Superlegierung, welche eine Turbinenschaufel bildet, beschrieben. Die Aluminidbeschichtung wird auf chemischem Wege durch eine Säuremischung entfernt, welche im wesentlichen die Nickel-Superlegierung nicht angreift. Bei der verwendeten Mischung handelt es sich um eine Mischung aus Salpetersäure (HNO₃) und Salzsäure (HCl) mit Eisenchlorid (FeCl₃) und Kupfersulfat (CuSO₄). Dieses Verfahren wird bevorzugt bei Nickei-Superlegierungen mit den Bezeichnungen U-700, IN-100, MAR M-200 und B1900 angewendet. 2

Die EP 0 761 386 A1 beschreibt ein Verfahren zur Entfernung von Innenbeschichtungen von Kühlkanälen einer Gasturbine, wobei eine abrasiv wirkende Partikel enthaltene Suspension durch die Kanäle geführt wird. Die abtragende Wirkung erfolgt rein mechanisch.

Die US-PS 4,439,241 offenbart ein Verfahren zur Entfernung von Ablagerungen oder Verunreinigungen auf einer Oberfläche innerhalb von Hohlräumen durch chemische und/oder abrasive Reinigungsmaßnahmen.

Die WO 98/06802 offenbart die Verwendung von abrasiven Partikeln in saurer oder alkalischer Flüssigkeit zur Entfernung von Lack- oder Farbablagerungen von Innenoberflächen eines Anstrichmittelabgabesystems.

Aufgabe der Erfindung ist es, ein Verfahren zur Innenbearbeitung eines hohlen Bauteils für eine Hochtemperaturanwendung mit einem Grundkörper aus einem Grundwerkstoff anzugeben, durch das eine Bearbeitung einer im Hohlraum angebrachten Innenbeschichtung ermöglicht ist.

Bei dem erfindungsgemäßen Verfahren wird der Hohlraum eines Bauteils mit einem Grundwerkstoff aus einer Nickel- und/oder Kobalt-Basislegierung (Superlegierung für Hochtemperaturanwendungen) mit einem Bearbeitungsfluid aus einer sauren oder alkalischen wässrigen Lösung durchströmt, welchem abrasiv wirkende Feststoffpartikel zugefügt sind, wobei durch das Bearbeitungsfluid eine Innenbeschichtung im Hohlraum abgetragen wird.
Solche Basislegierungen sind beispielsweise in der US-PS 4,339,282 und der EP 0 486 489 B1 angegeben. Diese Basislegierungen eignen sich insbesondere zur Herstellung von Bauteilen für Hochtemperaturanwendungen, beispielsweise im Gasturbinenbau.
Die saure wässrige Lösung kann hierbei eine Säuremischung aus verschiedenen Säuren aufweisen, wie es beispielsweise in der US-PS 4,339,282 beschrieben ist.
Bevorzugt handelt es sich aber bei dem Bearbeitungsfluid um eine Flüssigkeit oder eine Mischung verschiedener Flüssigkeiten, welche entsprechend dem Material der Innenbeschichtung sowie dem Grundwerkstoff ausgewählt werden. Hierdurch ist eine Entfernung der Innenbeschichtung ("Stripping") ermöglicht, ohne daß unzulässige Angriffe auf den Grundwerkstoff auftreten. Die Beschichtung wird auf mechanischem Wege durch die abrasiv wirkenden Feststoffpartikel entfernt und das Bearbeitungsfluid kann somit eine gegebenenfalls nur schwache chemische Wirkung in Bezug auf den Grundwerkstoff haben. Hierdurch kann selbst bei einer geringen Aggressivität und Einwirkungsdauer des Bearbeitungsfluides trotzdem in kurzer Zeit eine Entfernung der Innenbeschichtung ohne einen nennenswerten Angriff des Grundwerkstoffs durchgeführt werden. Das Verfahren eignet sich insbesondere bei Bauteilen, welche über einen längeren Einsatzzeitraum einer hohen Temperatur, beispielsweise von über 1000 °C, ausgesetzt waren. Bei einem solchen Bauteil kann die Innenbeschichtung, welche ursprünglich überwiegend aus einer Substanz bestanden hat, durch thermisch bedingte Umwandlungen Bereiche unterschiedlicher chemischer Zusammensetzung aufweisen, insbesondere stabile Oxide aufweisen. Solche Oxide (durchoxidierte Bereiche der Innenbeschichtung) können durch die abrasiv wirkenden Feststoffpartikel simultan mit anderen, nicht durchoxidierten Bereichen der Innenbeschichtung komplett beseitigt werden. Dies ermöglicht eine störungsfreie Neubeschichtung ohne mangelhafte Schichtausbildung in Bereichen von Oxidresten, so daß eine gleichmäßige Neubeschichtung des Hohlraums ohne unerwünschte Veränderungen des Hohlraumquerschnitts, insbesondere kein Verschluß des Hohlraums, auftreten kann. Dies ist vor allem bei Hochtemperatur-belasteten Komponenten, welche durch in Kühlkanälen geführtem Kühlfluid gekühlt werden, von besonderem Vorteil, da durch das erfindungsgemäße Verfahren die Durchströmbarkeit der Kühlkanäle nach Abtrag der Innenbeschichtung und Neubeschichtung der Kühlkanäle gewährleistet ist.

Gegenüber rein chemischen Bearbeitungsverfahren, bei denen Säuregemische eingesetzt werden, wird mit dem erfindungsgemäßen Verfahren auch eine Bearbeitung einer Innenbeschichtung mit unterschiedlich auf chemische Reagenzien reagierenden Bereichen, insbesondere chemisch residente Oxidbereiche und chemisch leicht abtragbare Bereiche, beispielsweise mit einem hohen reinen metallischen Anteil, ermöglicht. Mit dem erfindungsgemäßen Verfahren kann hierbei von dem Einsatz einer wäßrigen Lösung von Fluorwasserstoff (Flußsäure) abgesehen werden, wodurch die Gefahr eines chemischen unkontrollierbaren intergranularen Angriffs auf den Grundwerkstoff vermieden wird.

Vorzugsweise wird das Bearbeitungsfluid mit den abrasiv wirkenden Feststoffpartikeln in einem Kreislauf geführt, wodurch die abrasiv wirkenden Feststoffpartikel nur bei Bedarf zu erneuern sind. Dies erhöht deutlich die Wirtschaftlichkeit des gesamten Verfahrens.

Das Bearbeitungsfluid besteht vorzugsweise aus einer sauren, wäßrigen Lösung, die Flußsäure-frei ist.

Es ist ebenfalls denkbar, als Bearbeitungsfluid ein Gas zu verwenden, welches als Trägergas für die abrasiv wirkenden Feststoffpartikel dient.

Als abrasiv wirkende Feststoffpartikel werden solche verwendet, die einen hinreichend schnellen Abtrag der mechanisch und/oder chemisch stabilsten Bereiche der Innenbeschichtung gewährleistet. Vorzugsweise bestehen die abrasiv wirkenden Feststoffpartikel aus Korund und/oder Siliciumkarbid. Hierdurch kann eine notwendige Einwirkungsdauer eines chemisch aktiven Bearbeitungsfluides reduziert werden. Insbesondere werden hierdurch Bereiche mit einem chemisch resistenten Oxid, vor allem Aluminiumoxid, in einer kurzen Zeit entfernt. Insbesondere bei einer Innenbeschichtung, die ein Aluminid aufweist, werden die infolge eines Hochtemperatureinsatzes sich bildenden Aluminiumoxidbereiche, welche eine größere Dicke als die Aluminidbereiche aufweisen, schneller abgetragen. Gegenüber der Innenbeschichtung in Form einer reinen Alitierung werden die volumenreicheren Aluminiumoxidbereiche bevorzugt abgetragen. Bevorzugt ist der Durchmesser der Feststoffpartikel (Partikelgröße) deutlich geringer als der Minimaldurchmesser des Hohlraums, wodurch die Gefahr einer Verstopfung (Blockage) des Hohlraums beseitigt ist. Vorzugsweise ist die Partikelgröße um eine Größenordnung kleiner als der Minimaldurchmesser, d.h. beträgt weniger als ein Zehntel des Minimaldurchmessers. Der Minimaldurchmesser eines Hohlraums, z.B. einer Kühlbohrung einer Gasturbinenschaufel, kann größenordnungsmäßig 0,5 mm oder mehr betragen.

Vorzugsweise wird das Bearbeitungsfluid durch den Hohlraum mit einer vorgegebenen Geschwindigkeit geführt. Diese Geschwindigkeit kann auf experimentellem Wege oder durch Simulationsrechnung vorab bestimmt werden. Die Geschwindigkeit weist lokal betrachtet in einzelnen Hohlräumen, z.B. Kühlkanälen, Bohrungen von Turbinenschaufeln je nach Art des Bauteils einen entsprechend geeigneten Wert auf. Es ist ebenfalls möglich, die Geschwindigkeit bei Durchführung des Verfahrens entsprechend der bereits erfolgten Abtragung der Innenbeschichtung entsprechend anzupassen. Es versteht sich, daß die Geschwindigkeit auch der Art der abrasiven Feststoffpartikel sowie der chemischen Zusammensetzung des Bearbeitungsfluides angepaßt werden kann. Das Bearbeitungsfluid wird hierbei vorzugsweise durch das Bauteil hindurchgepumpt, wobei eine Einstellung der Geschwindigkeit durch die Pumpleistung der Pumpe erfolgen kann. Hierdurch läßt sich die gewünschte Reinigungswirkung (Abtrag der Innenbeschichtung) einstellen sowie ein unerwünschter Abtrag des Grundwerkstoffs drastisch reduzieren.

Vorzugsweise wird das Verfahren an einem Bauteil einer Strömungsmaschine, insbesondere einer Gasturbine, wie einer Turbinenschaufel oder einem Hitzeschildelement durchgeführt. Ein solches Bauteil kann hierbei eine Mehrzahl von Hohlräumen aufweisen, die als Längs- und/oder Querkanäle ausgebildet sind. Die Hohlräume (Kanäle) können hierbei auch unterschiedliche Durchmesser aufweisen und strömungstechnisch voneinander getrennt sein. Während einem bestimmungsgemäßen Einsatz des Bauteils werden die Kanäle beispielsweise von einem Kühlfluid, insbesondere Kühlluft, durchströmt. Bei dem Verfahren zur Innenbearbeitung eines Bauteiles kann hierbei die Strömungsrichtung des Bearbeitungsfluides dieselbe wie die Strömungsrichtung des Kühlfluides oder aber auch dieser entgegengesetzt sein. Bei strömungstechnisch voneinander getrennten Kanälen (Hohlräumen) kann das Verfahren so durchgeführt werden, daß die Kanäle voneinander getrennt von einem Bearbeitungsfluid durchströmt werden. Insbesondere ist es möglich, entgegen der Strömungsrichtung des Kühlfluids erst einen Kanal mit einer entsprechenden Strömungsgeschwindigkeit und einem entsprechend ausgewählten Bearbeitungsfluid mit abrasiven Feststoffpartikeln zu bearbeiten und anschließend mit entsprechend angepaßten Parametern ein oder mehrere weitere Kanäle zu durchströmen.

Bevorzugt weist die Innenbeschichtung ein Aluminiumoxid (Al₂O₃) und/oder ein Aluminid auf. Die Innenbeschichtung weist somit zumindest zwei Bereiche mit unterschiedlichen chemischen und mechanischen Eigenschaften auf. Eine solche Innenbeschichtung liegt beispielsweise in einer hohen Temperatur ausgesetzten Bauteilen vor, wobei eine ursprüngliche Innenbeschichtung durch Alitierung hergestellt wurde, und abhängig von der lokalen Bauteiltemperatur in einem heißen Abschnitt ein Teil des Aluminides in Aluminiumoxid umgewandelt wurde und in einem kühleren Abschnitt des Hohlraums noch weitgehend Aluminid vorliegt. Durch die Umwandlung eines Teils des Aluminids in Aluminiumoxid entsteht eine Oxidations- und/oder Korrosionsschutzschicht gegenüber einem während des Einsatzes des Bauteils in dem Hohlraum strömenden (Kühl-)Fluid. Dies tritt insbesondere bei Gasturbinenschaufeln auf, bei denen eine Innenbeschichtung aus einem Nickel- oder Kobaltaluminid hergestellt wird, in dem Aluminium auf einen Nickel- oder Kobalt-haltigen Grundwerkstoff aufgebracht wird und in diesen eindiffundiert.

Alternativ oder zusätzlich kann eine bevorzugte Innenbeschichtung Chromoxid und/oder ein Chromid aufweisen. Es ist ebenfalls möglich, daß eine Innenbeschichtung durch eine Galitierung hergestellt wird, so daß die Innenbeschichtung nach einem Einsatz des Bauteils bei einer hohen Temperatur-Galliumoxid und/oder ein Gallid aufweist.

Vorzugsweise wird nach einer Abtragung der Innenbeschichtung der Hohlraum (die Kühlkanäle) erneut mit einer Innenbeschichtung versehen. Hierdurch wird eine Instandsetzung (Wiederherstellung, "Refurbishment") des Bauteils zu einem erneuten Einsatz bei einer hohen Temperatur auf wirksame Art und Weise erreicht.

Anhand der in der Zeichnung dargestellten Ausführungsbeispiele wird das erfindungsgemäße Verfahren näher erläutert. Es zeigen hierbei schematisch und nicht maßstäblich
- FIG 1: einen Längsschnitt durch eine Laufschaufel einer Gasturbine und
- FIG 2: einen Ausschnitt eines Längsschnitts durch eine Gasturbinenschaufel mit einer äußeren Wärmedämmschicht.

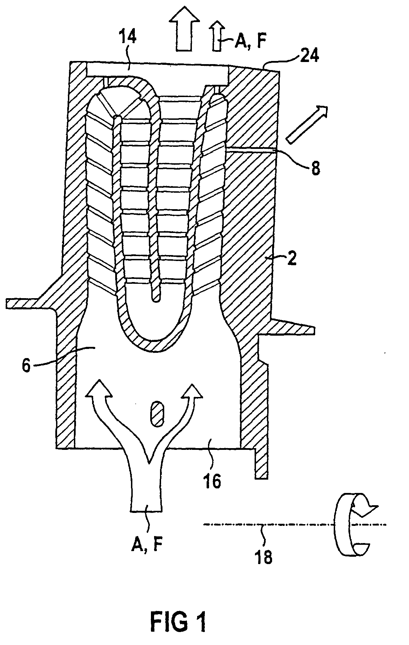

In Figur 1 ist ein Bauteil 2, hier eine Laufschaufel 2, einer nicht näher dargestellten Gasturbine gezeigt. Während eines Betriebes der Gasturbine rotiert die Laufschaufel 2 um eine Turbinenachse 18. Die Laufschaufel 2 weist einen zwei strömungstechnisch voneinander getrennte Längskanäle bildenden Hohlraum 6 auf. Dieser weist zur Turbinenachse 18 hin gewandt eine Eintrittsöffnung 16 für Kühlluft A sowie eine am achsfernen Ende 24 der Laufschaufel 2 angeordnete Austrittsöffnung 14 auf. Während des normalen Einsatzes der Laufschaufel 2 gelangt Kühlluft A durch die Eintrittsöffnung 16 in den Hohlraum 6 ein, wird dort in zwei Teilströme aufgeteilt, wobei der größere Teilstrom serpentinartig durch den Hohlraum 6 hindurch zur Austrittsöffnung 14 geführt wird. Der kleinere Teilstrom gelangt einerseits zur Austrittsöffnung 14, andererseits zu einer Mehrzahl von Querkanälen 8 (von denen der Übersichtlichkeit halber nur einer dargestellt ist) aus dem Hohlraum 6 heraus. Zur Innenbearbeitung, zur Abtragung einer nicht näher dargestellten Innenbeschichtung des Hohlraums 6, wird dieser in derselben Strömungsrichtung wie die Kühlluft A von einem Bearbeitungsfluid F, welches nicht näher dargestellte abrasive Feststoffpartikel aufweist, durchströmt.

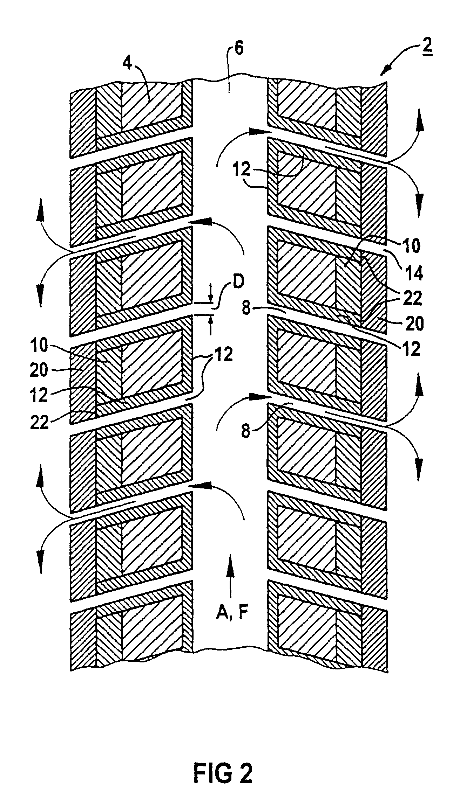

In Figur 2 ist ein Ausschnitt durch eine Schaufel 2, eine Leitschaufel oder eine Laufschaufel, für eine nicht dargestellte Gasturbine mit einem metallischen Grundkörper 4 aus einem Grundwerkstoff beschrieben. Bei dem Grundwerkstoff des Grundkörpers 4 kann es sich insbesondere um eine Nickel- oder Kobalt-Basissuperlegierung handeln. Etwa zentral im Inneren des Grundkörpers 4 befindet sich ein Längskanal 6. Von diesem Längskanal 6 zweigt eine Anzahl von Querkanälen 8 ab. Längskanal 6 und Querkanäle 8 dienen während eines Einsatzes der Schaufel 2 in einer Gasturbine zur Durchleitung eines Kühlmediums A, insbesondere Kühlluft. Außen auf jeder Seite des Grundkörpers 4 ist jeweils eine Deckschicht 10 direkt aufgebracht. Diese Deckschicht 10 besteht vorzugsweise aus einer Legierung der Art MCrAlY oder MCrAlRe. Eine solche Legierung kann unmittelbar als Korrosions- oder Oxidationsschutzschicht sowie als Haftvermittlerschicht für eine Wärmedämmschicht 20 dienen. Bei der Klasse von Legierungen für Schutzschichten unter dem Sammelbegriff "MCrAlY-Legierung" steht M für mindestens eines der Elemente aus der Gruppe umfassend Eisen, Kobalt und Nickel, sowie Cr für Chrom, Al für Aluminium und Y für Yttrium. Solche Legierungen sind beispielsweise in der EP 0 412 397 A1, der EP 0 486 489 B1 und der EP 0 397 731 B1 beschrieben. Bei einer MCrAlRe-Legierung steht Re für Rhenium und M, Cr und Al für die Elemente analog zu den MCrAlY-Legierungen. Die Deckschicht 10 besitzt vorzugsweise eine Dicke von 180 µm bis 300 µm. Die Querkanäle 8 weisen nach außen hin jeweils eine Austrittsöffnung 14 für das Kühlmedium A auf und sind von der Deckschicht 10 freigelassen. Die Deckschicht 10 ist bevorzugt durch ein Niederdruck-Plasma- oder ein Vakuum-Plasma-Spritzverfahren aufgebracht. Sie erfüllt die Funktion einer äußeren Schutzschicht.

In dem Längskanal 6 und den Querkanälen 8 ist eine Innenbeschichtung 12 vorgesehen, die auch in den Querkanälen 8 seitlich in einen Bedeckungsbereich 16 einen Teil der Deckschicht 10 bedeckt. Die Innenbeschichtung 12 wurde als Anreicherungsschicht mit einer Dicke von 30 µm bis 100 µm vor Einsatz der Schaufel 2 in einer Gasturbine hergestellt. Sie wird bevorzugt durch ein Diffusionsverfahren aufgebracht, wobei Chrom, Aluminium und/oder Gallium aufgedampft und eindiffundiert werden.

Außen auf der Deckschicht 10 ist unter Freilassung der Austrittsöffnung 14 eine keramische Wärmedämmschicht 20 vorgesehen. Die Wärmedämmschicht 20 besitzt eine Dicke von 100 µm bis 500 µm, bevorzugt eine Dicke von 200 µm bis 300 µm. Sie kann aus einem der konventionell bekannten Materialien, wie mit Yttrium stabilisiertem Zirkonoxid, bestehen. Die Wärmedämmschicht 20 bedeckt unter Freilassung der Austrittsöffnung 14 sowohl die Deckschicht 10 als auch in einem als Überdekkungsbereich 22 bezeichneten geringen Teil die Innenbeschichtung 12. Die Wärmedämmschicht 20 kann durch ein atmosphärisches Plasma-Spritzverfahren (atmospheric plasma spraying, APS) oder durch ein physikalisches Aufdampfverfahren (physical vapour deposition, PVD) aufgebracht sein.

Die Schaufel besitzt somit einen innenbeschichteten Kühl-Längskanal 6 und eine Anzahl davon abzweigender innenbeschichteter Kühl-Querkanäle 8, für die Durchströmung mit dem Kühlmittel A. Während eines Betriebes der Schaufel 2 in einer Gasturbine bei einer hohen Temperatur von beispielsweise über 1000 °C wird abhängig von der lokalen Bauteiltemperatur ein Teil des Aluminides in Aluminiumoxid umgewandelt, was dem wirksamen Prinzip einer Schutzschicht entspricht. In kühleren Bereichen der Kühlkanäle 6, 8 kann dagegen auch nach langen Betriebszeiten die Innenbeschichtung noch weitgehend als Aluminid vorliegen. Bei der Wiederaufarbeitung des Bauteils, der Schaufel 2, nach Absolvieren einer Betriebsperiode ist es daher notwendig, die Innenbeschichtung zu entfernen ("Stripping").

Hierzu wird der Längskanal 6 und davon abzweigend die Querkanäle 8 in der Strömungsrichtung des Kühlmediums A von einem Bearbeitungsfluid F mit abrasiv wirkenden Feststoffpartikeln in einem Durchflußverfahren, vorzugsweise in einem geschlossenen Kreislauf, durchströmt. Mittels der abrasiv wirkenden Feststoffpartikel, insbesondere solchen aus Korund und/oder Siliciumkarbid, werden die Aluminiumoxid-reichen Bereiche, welche volumenreicher als die noch vorhandenen Aluminidbereiche sind, bevorzugt abgetragen. Das Bearbeitungsfluid F ist seinerseits chemisch reaktiv, so daß es zu einer Entfernung der noch vorhandenen Aluminidbereiche dient, ohne einen wesentlichen Angriff auf den Grundwerkstoff durchzuführen. Die Durchströmung des Längskanals 6 und der Querkanäle 8 erfolgt mit einer solchen Geschwindigkeit, daß die gewünschte Reinigungswirkung erzielt wird, ohne daß ein nennenswerter Abtrag des Grundwerkstoffs erfolgt. Die Größe der Feststoffpartikel ist hierbei so gewählt, daß ein Verschluß (Verstopfen) der Querkanäle 8, welche einen minimalen Durchmesser sämtlicher Kanäle (Hohlräume) 6, 8 definieren, auftreten könnte. Bevorzugt ist hierbei der Durchmesser der Feststoffpartikel kleiner als ein Zehntel des Durchmessers D der Querkanäle 8.
Nachdem die Innenbeschichtung 12 mittels des Verfahrens abgetragen wurde und gegebenenfalls auch die Deckschicht 10 sowie die Wärmedämmschicht 20 durch entsprechende Verfahren wie Abrasivbestrahlen oder chemische Naßverfahren ebenfalls entfernt wurden, wird erneut eine Innenbeschichtung durch Alitieren, Chromieren und/oder Galitieren erzeugt und damit die Schaufel für einen erneuten Einsatz in einer Gasturbine wiederhergestellt.

## Patentansprüche

1. Verfahren zur Innenbearbeitung eines hohlen Bauteils (2) für eine Hochtemperaturanwendung mit einem Grundkörper (4) aus einem Grundwerkstoff aus einer Nickel- und/oder Kobaltbasislegierung, welches Bauteil (2) einen Hohlraum (6,8) mit einer Innenbeschichtung (12) aufweist, wobei der Hohlraum (6,8) mit einem Bearbeitungsfluid (F) durchströmt wird, welchem Bearbeitungsfluid (F) abrasivwirkende Feststoffpartikel zugefügt sind und durch welches Bearbeitungsfluid (F) die Innenbeschichtung (12) abgetragen wird, wobei als Bearbeitungsfluid (F) eine saure wässrige Lösung oder eine alkalische wässrige Lösung verwendet wird.

2. Verfahren nach Anspruch 1, bei dem das Bearbeitungsfluid (F) in einem Kreislauf geführt wird.

3. Verfahren nach Anspruch 1 oder 2, bei dem als Bearbeitungsfluid (F) eine flußsäurefreie Säuremischung verwendet wird.

4. Verfahren nach einem der vorhergehenden Ansprüche , bei dem als abrasivwirkende Feststoffpartikel solche aus Korund und/oder Siliziumkarbid verwendet werden.

5. Verfahren nach einem der vorhergehenden Ansprüche, bei dem abrasivwirkende Feststoffpartikel mit einem Durchmesser von weniger als einem Zehntel des minimalen Durchmesser (D) des Hohlraumes (6,8) verwendet werden.

6. Verfahren nach einem der vorhergehenden Ansprüche, bei dem das Bearbeitungsfluid (F) durch den Hohlraum (6,8) mit einer vorgegebenen Geschwindigkeit geführt wird.

7. Verfahren nach einem der vorhergehenden Ansprüche, welches an einem Bauteil (2) einer Strömungsmaschine, insbesondere einer Gasturbine, wie einer Turbinenschaufel oder einem Hitzschildelement durchgeführt wird.

8. Verfahren nach einem der vorhergehenden Ansprüche, welches an einem Bauteil (2) durchgeführt wird, bei dem die Innenbeschichtung (12) Aluminiumoxid und/oder ein Aluminid aufweist.

9. Verfahren nach einem der vorhergehenden Ansprüche, welches an einem Bauteil (2) durchgeführt wird, bei dem die Innenbeschichtung (12) Chrommoxid und/oder ein Chromid aufweist.

10. Verfahren nach einem der vorhergehenden Ansprüche, bei dem die Innenbeschichtung (1) Galliumoxid und/oder ein Gallid aufweist.

11. Verfahren nach einem der vorhergehenden Ansprüche, bei nach Abtragung der Innenbeschichtung (12) der Hohlraum (6,8) erneut beschichtet wird.

## Claims

1. Process for machining the interior of a hollow component (2) for a high-temperature application which has a base body (4) made from a base material made from a nickel-based and/or cobalt-based alloy, which component (2) has a cavity (6,8) with an internal coating (12), a machining fluid (F) flowing through the cavity (6,8), to which machining fluid (F) solid particles with an abrasive action are added and by which machining fluid (F) the internal coating (12) is abraded, an acidic, aqueous solution or an alkaline, aqueous solution being used as machining fluid (F).

2. Process according to Claim 1, in which the machining fluid (F) is passed in a circuit.

3. Process according to Claim 1 or 2, in which an acid mixture which is free of hydrofluoric acid is used as machining fluid (F).

4. Process according to one of the preceding claims, in which particles of corundum and/or silicon carbide are used as solid particles with an abrasive action.

5. Process according to one of the preceding claims, in which abrasive solid particles with a diameter of less than one tenth of the minimum diameter (D) of the cavity (6,8) are used.

6. Process according to one of the preceding claims, in which the machining fluid (F) is passed through the cavity (6,8) at a predetermined velocity.

7. Process according to one of the preceding claims, which is carried out on a component (2) of a turbomachine, in particular a gas turbine, such as a turbine blade or a heat shield element.

8. Process according to one of the preceding claims, which is carried out on a component (2) in which the internal coating (12) contains aluminium oxide and/or an aluminide.

9. Process according to one of the preceding claims, which is carried out on a component (2) in which the internal coating (12) contains chromium oxide and/or a chromide.

10. Process according to one of the preceding claims, in which the internal coating (1) contains gallium oxide and/or a gallide.

11. Process according to one of the preceding claims, in which after abrasion of the internal coating (12), the cavity (6,8) is coated again.

## Revendications

1. Procédé de traitement de l'intérieur d'un élément (2) creux pour une utilisation à haute température, comprenant un corps (4) de base en un matériau de base en un alliage à base de nickel et/ou à base de cobalt, l'élément (2) comprenant une cavité (6, 8) ayant un revêtement (12) intérieur, en faisant passer un fluide (F) de traitement dans la cavité (6, 8), fluide (F) de traitement auquel sont ajoutées des particules de matière solide à effet abrasif et par lequel (F) le revêtement (12) intérieur est enlevé, dans lequel on utilise comme fluide (F) de traitement une solution aqueuse acide ou une solution aqueuse alcaline.

2. Procédé suivant la revendication 1, dans lequel on fait passer le fluide (F) de traitement suivant un circuit.

3. Procédé suivant la revendication 1 ou 2, dans lequel on utilise comme fluide (F) de traitement un mélange d'acides exempt d'acide fluorhydrique.

4. Procédé suivant l'une des revendications précédentes, dans lequel on utilise comme particules de matière solide à effet abrasif des particules en corindon et/ou en carbure de silicium.

5. Procédé suivant l'une des revendications précédentes, dans lequel on utilise des particules de matière solide à effet abrasif d'un diamètre d'au moins un dixième du diamètre (D) minimum de la cavité (6, 8).

6. Procédé suivant l'une des revendications précédentes, dans lequel on fait passer le fluide (F) de traitement dans la cavité (6, 8) à une vitesse donnée à l'avance.

7. Procédé suivant l'une des revendications précédentes, qui s'effectue sur un élément (2) d'une turbomachine, notamment d'une turbine à gaz, comme une aube de turbine ou un élément formant bouclier thermique.

8. Procédé suivant l'une des revendications précédentes, qui s'effectue sur un élément (2), dans lequel le revêtement (12) intérieur comprend de l'oxyde d'aluminium et/ou un aluminure.

9. Procédé suivant l'une des revendications précédentes, qui s'effectue sur un élément (2), dans lequel le revêtement (12) intérieur comprend de l'oxyde de chrome et/ou un chromure.

10. Procédé suivant l'une des revendications précédentes, dans lequel le revêtement (1) intérieur comprend de l'oxyde de gallium et/ou un galliure.

11. Procédé suivant l'une des revendications précédentes, dans lequel on revêt à nouveau la cavité (6, 8) après enlèvement du revêtement (12) intérieur.
